(19) Europäisches Patentamt
European Patent Office
Office européen des brevets

(11) **EP 2 699 000 A1**

(12) **EUROPEAN PATENT APPLICATION**
published in accordance with Art. 153(4) EPC

(43) Date of publication:
**19.02.2014 Bulletin 2014/08**

(51) Int Cl.:
*H04N 7/32* (2006.01)    *H04N 7/26* (2006.01)
*H04N 7/34* (2006.01)

(21) Application number: **12808127.0**

(22) Date of filing: **02.07.2012**

(86) International application number:
**PCT/CN2012/078058**

(87) International publication number:
**WO 2013/004163 (10.01.2013 Gazette 2013/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **01.07.2011  CN 201110184370**

(71) Applicant: **Huawei Technologies Co., Ltd Shenzhen, Guangdong 518129 (CN)**

(72) Inventors:
• **LIN, Yongbing**
  **Shenzhen**
  **Guangdong 518129 (CN)**

• **LAI, Changcai**
  **Shenzhen**
  **Guangdong 518129 (CN)**

(74) Representative: **Maiwald Patentanwalts GmbH Engineering Elisenhof Elisenstrasse 3 80335 München (DE)**

(54) **PIXEL PREDICTION METHOD AND DEVICE**

(57)    An embodiment of the present invention provides a pixel prediction method, including: obtaining an average pixel value of reference pixel points on a long side of a current block if the current block is rectangular and coded or decoded adjacent blocks of the current block are all available, where the reference pixel points are all located at boundaries of the adjacent blocks near the current block; and obtaining a prediction pixel value of the current block according to the average pixel value of the reference pixel points on the long side. According to the pixel prediction method and apparatus provided in the embodiments of the present invention, a prediction pixel is obtained from corresponding adjacent blocks according to a shape of the current block, meeting a pixel distribution rule.

101

Obtain an average pixel value of reference pixel points that are located at a long side of a current block, if the current block is rectangular and coded or decoded adjacent blocks of the current block are all available

102

Obtain a prediction pixel value of the current block according to the average pixel value of the reference pixel points on the long side

FIG. 1

## Description

## TECHNICAL FIELD

The present invention relates to video coding and decoding technologies, and in particular to a pixel prediction method and apparatus in the video coding and decoding technologies.

## BACKGROUND

A basic principle of video coding compression is to reduce redundancy to the maximum by using correlations between a space domain, a time domain, and a code word. Currently, a popular method is to use a block-based hybrid video coding framework. That is, at a coding end to video coding compression is implemented through steps such as prediction, transformation, quantization, and entropy coding, and at a decoding end, these steps are performed correspondingly to restore a pixel value of the image.

Before the prediction is performed, an image needs to be divided into multiple sub-image blocks, and then the prediction is performed by taking these sub-image blocks as units. In the industry, these sub-image blocks are generally square. However, with the development of technologies, the industry gradually has proposed a method for dividing an image block into multiple rectangles. Dividing an image into rectangles may meet a special requirement for image block coding to a certain degree, but no prediction method that adapts to this new dividing method has emerged.

## SUMMARY

An embodiment of the present invention provides a pixel prediction method, including:

obtaining an average pixel value of reference pixel points on a long side of a current block if the current block is rectangular and coded or decoded adjacent blocks of the current block are all available, where the reference pixel points are all located at boundaries of the adjacent blocks near the current block; and obtaining a prediction pixel value of the current block according to the average pixel value of the reference pixel points on the long side.

An embodiment of the present invention further provides a pixel prediction apparatus that uses the pixel prediction method, including:

a reference pixel value obtaining module, configured to obtain an average pixel value of reference pixel points on a long side of a current block if the current block is rectangular and coded or decoded adjacent blocks of the current block are all available, where the reference pixel points are all located at boundaries of the adjacent blocks near the current block; and a prediction pixel value obtaining module, configured to obtain a prediction pixel value of the current block according to the average pixel value of the reference pixel points on the long side.

According to the pixel prediction method and apparatus provided in the embodiments of the present invention, a prediction pixel is obtained from corresponding adjacent blocks according to a shape of the current block, meeting a pixel distribution rule.

## BRIEF DESCRIPTION OF DRAWINGS

To illustrate the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a pixel prediction method according to an embodiment of the present invention;
FIG. 2 is an application diagram of a pixel prediction method according to an embodiment of the present invention;
FIG. 3 is a schematic diagram of a pixel prediction apparatus according to an embodiment of the present invention; and
FIG. 4 is a schematic diagram of a pixel prediction apparatus according to another embodiment of the present invention.

## DESCRIPTION OF EMBODIMENTS

The technical solution in the embodiments of the present invention will be clearly and completely described in the following with reference to the accompanying drawings in the embodiments of the present invention. It is obvious that the described embodiments are merely a part rather than all of the embodiments of the present invention. All other embodiments obtained by a person of ordinary skill in the art based on the embodiments of the present invention without creative efforts shall fall within the protection scope of the present invention.

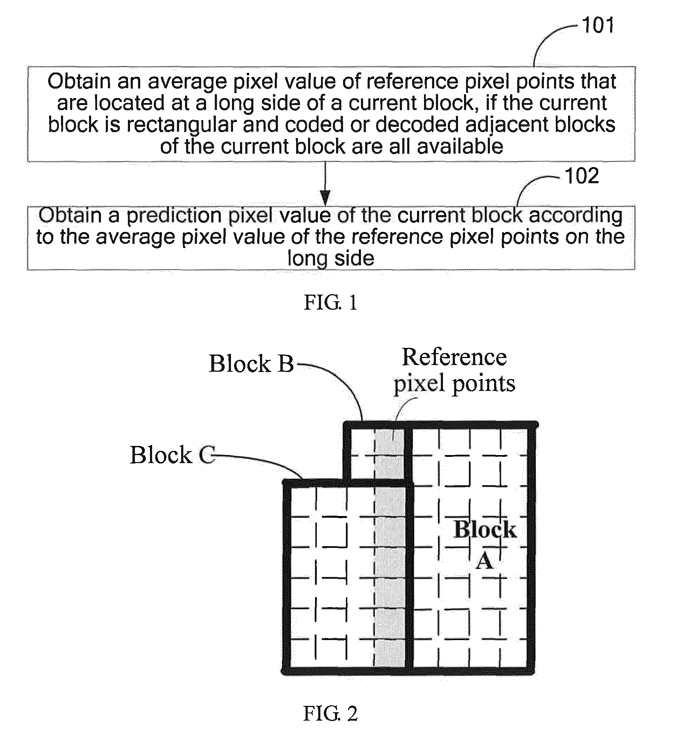

Referring to FIG. 1, an embodiment of the present invention provides a prediction method, including:

Step 101: Obtain an average pixel value of reference pixel points that are located on a long side of a current block, if the current block is rectangular and coded or decoded adjacent blocks of the current block are all available.

The reference pixels are all located at boundaries of the adjacent blocks near the current block.

It should be understood that one or more adjacent blocks may exist on one side of the current block and multiple reference pixel points may be arranged in each adjacent block.

Step 102: Obtain a prediction pixel value of the current block according to the average pixel value of the reference pixel points on the long side.

In the embodiment of the present invention, the obtaining a prediction pixel value of the current block according to the average pixel value of the reference pixel points on the long side includes taking the average pixel value of the reference pixel points on the long side as the prediction pixel value of the current block, or taking the average pixel value of the reference pixel points on the long side as a prediction pixel value of all the pixel points on the current block. Specifically, the prediction pixel value of the current block is obtained according to

the formula $DC = \dfrac{1}{n}\sum_{i=1}^{n} Pi$, where DC is the prediction pixel value of the current block, n is the number of the reference pixel points on the long side, and *Pi* indicates a pixel value of an i$^{th}$ reference pixel point among the reference pixel points on the long side.

Referring to FIG. 2 together, FIG. 2 is a schematic diagram of a pixel prediction method according to an embodiment of the present invention. As can be seen from the figure, a current block A is rectangular, and adjacent blocks adjacent to its long side include an adjacent block B and an adjacent block C. Therefore, in the embodiment of the present invention, reference pixel points adjacent to the current block are pixel points located at a boundary between the adjacent block B and the current block A and a boundary between the adjacent block C and the current block A, that is, pixel points with a gray background. In the embodiment of the present invention, because the current block A is rectangular, distribution of pixels of the current block A follows a gradation rule in a horizontal direction; in other words, they are similar to pixels of the adjacent block B and the adjacent block C. Therefore, according to the pixel prediction method provided in the embodiment of the present invention, a prediction pixel value of the current block A is obtained according to an average pixel value of the pixel points adjacent to the current block A in the adjacent block B and the adjacent block C, which can meet a basic requirement for pixel prediction. In addition, when the number of pixel points on the long side of the current block A is a power of 2, the total number of the reference pixel points of the adjacent block B and the adjacent block C is a power of 2. In this way, when the average pixel value is calculated, calculation of the average value can be performed through simple transposition of terms, thereby reducing algorithmic complexity.

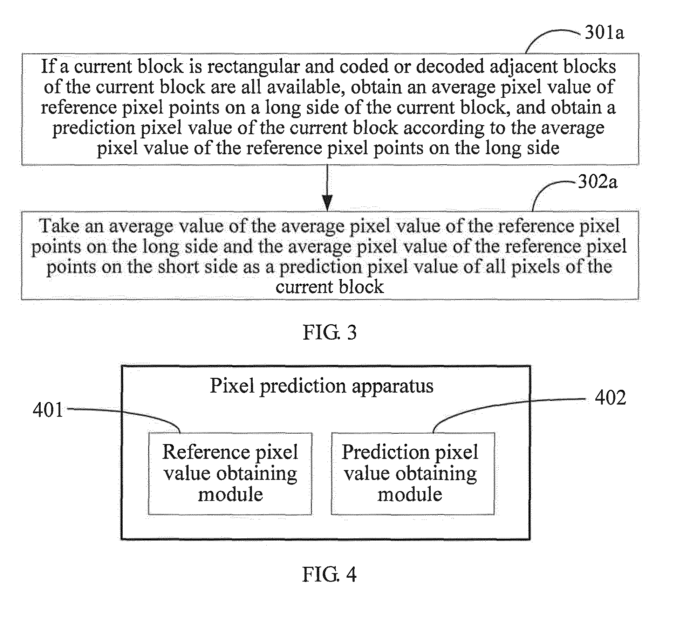

Referring to FIG 3, in the embodiment of the present invention, the obtaining an average pixel value of reference pixel points on a long side of a current block if the current block is rectangular and coded or decoded adjacent blocks of the current block are all available further includes:

Step 301a: Obtain an average pixel value of reference pixel points on a short side of the current block.

In the embodiment of the present invention, the obtaining an average pixel value of reference pixel points on a long side of the current block further includes:

Step 302a: Take an average value of the average pixel value of the reference pixel points on the long side and the average pixel value of the reference pixel points on the short side as a prediction pixel value of all pixels of the current block.

Specifically, the prediction pixel value of the current block is calculated according to the formula

$$DC = \dfrac{\left(\dfrac{1}{n}\sum_{i=1}^{n} Pi + \dfrac{1}{m}\sum_{j=1}^{m} Qj\right)}{2},$$ where DC is the prediction pixel value of the current block, n is the number of the reference pixel points adjacent to the long side of the current block, *Pi* indicates a pixel value of an i$^{th}$ reference pixel point adjacent to the long side of the current block, m indicates the number of the reference pixel points adjacent to the short side of the current block, and *Qj* indicates a pixel value of a j$^{th}$ reference pixel point adjacent to the short side of the current block.

In the embodiment of the present invention, the average value of the reference pixel points adjacent to the long side and the short side of the current block is taken as the prediction pixel value of the current block, so that prediction pixel values in an image block are distributed more evenly and transformation in each direction will not be too abrupt.

It should be noted that in the pixel prediction method provided in the embodiment of the present invention, when an adjacent block is available, a pixel value of a reference pixel point is taken as a reference pixel value; when the adjacent block is unavailable, a fixed value is directly filled into the reference pixel point as the reference pixel value.

FIG 4 is a schematic diagram of a pixel prediction apparatus that applies the pixel prediction method according to an embodiment of the present invention. The pixel prediction apparatus provided in the embodiment of the present invention includes:

a reference pixel value obtaining module 401, configured to obtain an average pixel value of reference pixel points on a long side of a current block if the current block is rectangular and coded or decoded adjacent blocks of the current block are all available, where the reference pixel points are all located at boundaries of the adjacent blocks near the current block; and

a prediction pixel value obtaining module 402, configured to obtain a prediction pixel value of the current block according to the average pixel value of the reference pixel points on the long side of the current block.

In the embodiment of the present invention, the prediction pixel value of the current block is obtained according to the formula $DC = \dfrac{1}{n}\sum_{i=1}^{n} Pi$ , where DC is the prediction pixel value of the current block, n is the number of the reference pixel points on the long side, and $Pi$ indicates a pixel value of an $i^{th}$ reference pixel point among the reference pixel points on the long side.

In an optional embodiment of the present invention, the reference pixel value obtaining module 401 is further configured to, if the current block is rectangular and the coded or decoded adjacent blocks of the current block are all available, obtain an average pixel value of reference pixel points on a short side of the current block. Accordingly, the prediction pixel value obtaining module is configured to take an average value of the average pixel value of the reference pixel points on the long side and the average pixel value of the reference pixel points on the short side as the prediction pixel value of the current block or a prediction pixel value of all pixel points of the current block, that is, to obtain the prediction pixel value of the current block according to the formula

$$DC = \dfrac{\left(\dfrac{1}{n}\sum_{i=1}^{n} Pi + \dfrac{1}{m}\sum_{j=1}^{m} Qj\right)}{2},$$ where DC is the prediction pixel value of the current block, n is the number of the reference pixel points on the long side, $Pi$ indicates the pixel value of the $i^{th}$ reference pixel point among the reference pixel points on the long side, m is the number of the reference pixel points on the short side, and $Qj$ indicates a pixel value of a $j^{th}$ reference pixel point among the reference pixel points on the short side.

Through the description of the preceding embodiments, a person skilled in the art may clearly understand that the present invention may be implemented by software plus a necessary universal hardware platform, and definitely may also be implemented by hardware, but in most cases, the former is a preferred implementation manner. Based on such understanding, the technical solutions of the present invention essentially, or the part contributing to the prior art may be implemented in the form of a software product. The computer software product is stored in a storage medium, such as a ROM/RAM, a magnetic disk, or an optical disk, and includes several instructions for instructing a computer device (which may be a personal computer, a server, a network device, or the like) to execute the methods described in the embodiments of the present invention or in some parts of the embodiments.

The foregoing describes exemplary embodiments of the present invention. It should be pointed that a person skilled in the art may make several improvements and modifications without departing from the principle of the present invention, and these improvements and modifications shall fall within the protection scope of the present invention.

**Claims**

1. A pixel prediction method, comprising:

   obtaining an average pixel value of reference pixel points on a long side of a current block if the current block is rectangular and coded or decoded adjacent blocks of the current block are all available, wherein the reference pixel points are all located at boundaries of the adjacent blocks near the current block; and
   obtaining a prediction pixel value of the current block according to the average pixel value of the reference pixel points on the long side.

2. The pixel prediction method according to claim 1, wherein there are $2^t$ pixel points on the long side of the current block and there are $2^f$ pixel points on a short side of the current block, and $t$ and $f$ each are an integer greater than or equal to 0.

3. The pixel prediction method according to claim 1, wherein the obtaining a prediction pixel value of the current block according to the average pixel value of the reference pixel points on the long side comprises:

   obtaining the prediction pixel value of the current block according to a formula $DC = \dfrac{1}{n}\sum_{i=1}^{n} Pi$ , wherein DC is the prediction pixel value of the current block, n is the number of the reference pixel points on the long side of the current block, and $Pi$ indicates a pixel value of an $i^{th}$ reference pixel point among the reference pixel points on the long side.

4. The pixel prediction method according to claim 1, wherein the obtaining a prediction pixel value of the current block according to the average pixel value of the reference pixel points on the long side comprises:

taking the average pixel value of the reference pixel points on the long side as a prediction pixel value of all pixel points of the current block.

5. The pixel prediction method according to claim 1, wherein the obtaining an average pixel value of reference pixel points on a long side of a current block if the current block is rectangular and coded or decoded adjacent blocks of the current block are all available further comprises:

obtaining an average pixel value of reference pixel points on a short side of the current block; and
the obtaining an average pixel value of reference pixel points on a long side of the current block further comprises:

taking an average value of the average pixel value of the reference pixel points on the long side and the average pixel value of the reference pixel points on the short side as a prediction pixel value of all pixels of the current block.

6. The pixel prediction method according to claim 5, wherein the taking an average value of the average pixel value of the reference pixel points on the long side and the average pixel value of the reference pixel points on the short side as a prediction pixel value of all pixels of the current block comprises:

obtaining the prediction pixel value of the current block according to a formula

$$DC = \frac{\left( \dfrac{1}{n} \sum_{i=1}^{n} Pi + \dfrac{1}{m} \sum_{j=1}^{m} Qj \right)}{2},$$ wherein DC is the prediction pixel value of the current block, n is the number of the reference pixel points on the long side of the current block, $Pi$ indicates a pixel value of an $i^{th}$ reference pixel point among the reference pixel points on the long side of the current block, m is the number of the reference pixel points on the short side of the current block, and $Qj$ indicates a pixel value of a $j^{th}$ reference pixel point among the reference pixel points on the short side of the current block.

7. A pixel prediction apparatus, comprising:

a reference pixel value obtaining module, configured to obtain an average pixel value of reference pixel points on a long side of a current block if the current block is rectangular and coded or decoded adjacent blocks of the current block are all available, wherein the reference pixel points are all located at boundaries of the adjacent blocks near the current block; and
a prediction pixel value obtaining module, configured to obtain a prediction pixel value of the current block according to the average pixel value of the reference pixel points on the long side.

8. The pixel prediction apparatus according to claim 7, wherein the reference pixel value obtaining module is further configured to, if the current block is rectangular and the coded or decoded adjacent blocks of the current are available, obtain an average pixel value of reference pixel points on a short side of the current block; and
the prediction pixel value obtaining module is configured to take an average pixel value of the reference pixel points on the long side and the average pixel value of the reference pixel points on the short side as a prediction pixel value of all pixel points of the current block.

101

Obtain an average pixel value of reference pixel points that are located at a long side of a current block, if the current block is rectangular and coded or decoded adjacent blocks of the current block are all available

102

Obtain a prediction pixel value of the current block according to the average pixel value of the reference pixel points on the long side

FIG. 1

Block B

Reference pixel points

Block C

Block A

FIG. 2

~301a

If a current block is rectangular and coded or decoded adjacent blocks of the current block are all available, obtain an average pixel value of reference pixel points on a long side of the current block, and obtain a prediction pixel value of the current block according to the average pixel value of the reference pixel points on the long side

~302a

Take an average value of the average pixel value of the reference pixel points on the long side and the average pixel value of the reference pixel points on the short side as a prediction pixel value of all pixels of the current block

FIG. 3

| Pixel prediction apparatus | |
| --- | --- |
| Reference pixel value obtaining module | Prediction pixel value obtaining module |

401

402

FIG. 4

# INTERNATIONAL SEARCH REPORT

| International application No. |
|---|
| **PCT/CN2012/078058** |

**A. CLASSIFICATION OF SUBJECT MATTER**

H04N 7/32 (2006.01) i
According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNPAT, CNKI: encode, decode, compress, pixel, value, forecast, rectangle, adjacent, neighbour, average, mean value, border, long edge, short edge, block

VEN, WPI, EPODOC: encode, decode, compress, pixel, value, forecast, predict, rectangle, neighbor, border, average, long, short, block

**C. DOCUMENTS CONSIDERED TO BE RELEVANT**

| Category* | Citation of document, with indication, where appropriate, of the relevant passages | Relevant to claim No. |
|---|---|---|
| A | CN 101232622 A (NOKIA CORP.), 30 July 2008 (30.07.2008), the whole document | 1-8 |
| A | CN 1455600 A (BEIJING UNIVERSTITY OF TECHNOLOGY), 12 November 2003 (12.11.2003), the whole document | 1-8 |
| A | CN 101483780 A (HUAWEI TECHNOLOGIES CO., LTD.), 15 July 2009 (15.07.2009), the whole document | 1-8 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 September 2012 (20.09.2012) | **18 October 2012 (18.10.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WU, Xunxun** Telephone No.: (86-10) **62411512** |
|---|---|

Form PCT/ISA/210 (second sheet) (July 2009)

# INTERNATIONAL SEARCH REPORT
Information on patent family members

International application No.

**PCT/CN2012/078058**

| Patent Documents referred in the Report | Publication Date | Patent Family | Publication Date |
|---|---|---|---|
| CN 101232622 A | 30.07.2008 | US 2003112864 A1 | 19.06.2003 |
| | | ZA 200308785 A | 24.11.2004 |
| | | KR 20110115181 A | 20.10.2011 |
| | | JP 2005503734 A | 03.02.2005 |
| | | CN 1331353 C | 08.08.2007 |
| | | IN 200705734 P4 | 30.05.2008 |
| | | JP 2011101411 A | 19.05.2011 |
| | | US 2005220353 A1 | 06.10.2005 |
| | | KR 100972850 B1 | 28.07.2010 |
| | | WO 03026296 A1 | 27.03.2003 |
| | | HU 0400295 A2 | 30.08.2004 |
| | | CN 1537384 A | 13.10.2004 |
| | | AU 2002324085 B2 | 06.09.2007 |
| | | KR 20080007276 A | 17.01.2008 |
| | | AU 2007237319 B2 | 20.01.2011 |
| | | JP 4698947 B2 | 08.06.2011 |
| | | RU 2317654 C2 | 20.02.2008 |
| | | MX 299841 B | 05.06.2012 |
| | | EP 1433316 A1 | 30.06.2004 |
| | | AU 2002324085 A1 | 01.04.2003 |
| | | US 7280599 B2 | 09.10.2007 |
| | | IN 252965 B | 15.06.2012 |
| | | BR 0211263 A | 20.07.2004 |
| | | AU 2007237319 A1 | 20.12.2007 |
| | | US 2008069203 A1 | 20.03.2008 |
| | | US 8036273 B2 | 11.10.2011 |
| | | HK 1118411 A1 | 16.12.2011 |
| | | IN 200400012 P4 | 18.12.2004 |
| | | US 6950469 B2 | 27.09.2005 |
| | | JP 2008187727 A | 14.08.2008 |
| | | SG 167662 A1 | 28.01.2011 |
| | | MX 2004000203 A1 | 01.04.2004 |
| | | JP 4700704 B2 | 15.06.2011 |
| | | KR 20040036902 A | 03.05.2004 |
| | | MX 251971 B | 29.11.2007 |
| | | CN 101232622 B | 13.04.2011 |
| CN 1455600 A | 12.11.2003 | CN 1204753 C | 01.06.2005 |
| CN 101483780 A | 15.07.2009 | WO 2009089779 A1 | 23.07.2009 |
| | | CN 101483780 B | 24.08.2011 |

Form PCT/ISA/210 (patent family annex) (July 2009)